# EUROPEAN PATENT APPLICATION

(11) **EP 4 421 026 A1**
(43) Date of publication of application: **28.08.2024**
(21) Application number: 23157783.4
(22) Date of filing: 21.02.2023
(51) Int. Cl.: C01B 3/38, C01B 3/48, C01B 3/52

(54) **PROCESS AND PLANT FOR PRODUCING A HYDROGEN-RICH GAS STREAM WITH MINIMUM EMISSION OF CARBON DIOXIDE**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Lim, Chin Han, 60439 Frankfurt am Main (DE); Schmidt, Sophia, 60439 Frankfurt am Main (DE); Weigand, Peter, 60439 Frankfurt am Main (DE); Covella, Karsten, 60388 Frankfurt am Main (DE)
(74) Representative: Air Liquide

(57) **Abstract**

Provided is a process for producing a hydrogen-rich synthesis gas stream from an input gas stream containing hydrocarbons. The process providing the input gas at a pressure between 20 and 80 bara, adding a first process steam stream to obtain a first process gas mixture, prereforming the mixture in a shaft reactor to reduce the content of higher hydrocarbons, autothermal reforming with a second process steam and oxygen stream to produce a hot raw synthesis gas, cooling the hot raw synthesis gas in a waste heat boiler (116, 316), converting the cooled raw synthesis gas in high and low temperature Co conversion stages with catalysts, and separating CO₂ in a physical scrubbing apparatus using methanol as the scrubbing medium. The result is a hydrogen-rich synthesis gas stream and a CO₂-rich gas stream. The process does not include any further reforming steps in a steam reformer with catayst-filled reformer tubes heated using burners.

## Description

### TECHNICAL FIELD

The present Invention relates generally to synthesis gas production; more specifically, the present Invention relates to a process and a plant for producing a hydrogen-rich synthesis gas stream from an input gas stream containing hydrocarbons, preferably from a natural gas stream, with emission of carbon dioxide being minimized.

### BACKGROUND

The current standard of energy production for industrial processes consumes large amounts of oil or natural gas, leading to high levels of CO₂ emissions and contributing to global warming. The provision of electric power through coal results in high levels of CO₂ emissions. The problem of reducing the carbon footprint of these energy consumers is crucial for meeting the CO₂ emissions targets set by all countries. The solution of post-combustion carbon capture is expensive and may not be economically viable for widespread use. Hydrogen production through electrolysis using renewable energy sources is a CO₂-neutral alternative, but the scale of electrolysers is limited and large-scale hydrogen production through this method is not yet cost-competitive.

The production of renewable energy for industrial processes, such as renewable electric power or biomass, is a potential solution for reducing CO₂ emissions. However, this technology is not yet economically or technically feasible, especially at large scales. Hydrogen produced through classical steam methane reform (SMR) process has limitations such as high CO₂ footprint when using existing plants, high costs for carbon capture equipment, and limited capacity per train leading to higher capital expenditures for larger hydrogen quantities.

In an existing solution, after the production of a hydrogen rich stream, a hydrogen purification step may be included. However, the inclusion of such step increases the cost of additional equipment. In another existing solution, carbon dioxide balance is redistributed from a reformer furnace flue gas to a high-pressure synthesis gas by reducing the recovery of hydrogen at pressure swing adsorption. However, such solutions also include a hydrogen purification step that increases the cost of additional equipment.

Therefore, there is a need to address the aforementioned technical drawbacks in existing known technologies for a cost-effective and scalable solution that lowers the emission of carbon dioxide formed during the synthesis gas production.

### SUMMARY

The present invention seeks to provide an improved approach for large scale production of a low carbon fuel gas with a reduction of overall carbon footprint of 90 % or more by a process comprising a single autothermal reforming reactor (ATR) capable of converting natural gas into a hydrogen based fuel gas containing only a small amount of hydrocarbons. An aim of the present invention is to provide a solution that overcomes, at least partially, the problems encountered in the prior art and provide a process and a plant for producing a hydrogen-rich synthesis gas stream from an input gas stream containing hydrocarbons, preferably from a natural gas stream, with an arrangement to achieve maximum conversion of the carbon monoxide (CO) to carbon dioxide (CO₂). The process includes shifting the synthesis gas out of the autothermal reforming reactor (ATR) via a two-step shift to achieve the maximum conversion of the carbon monoxide (CO) to carbon dioxide (CO₂) which in turn can be removed almost fully in a subsequent CO₂ removal unit for storage or utilization. The resulting product gas only contains a small percentage of unconverted methane and very low concentration of CO and CO₂ contributing to the scope 3 emission. For the superheating of the steam product stream, a fired heater is used which is mainly fired with some of the low carbon fuel produced, and hence scope 1 emission is reduced. The steam produced inside battery limits (ISBL) is used to generate electric power thereby reducing the import of electric power and hence reducing scope 2 emission.

The object of the present Invention is achieved by the solutions provided in the enclosed independent claims. Advantageous implementations of the present Invention are further defined in the enclosed dependent claims.

According to a first aspect, the present invention provides a process producing a hydrogen-rich synthesis gas stream from an input gas stream containing hydrocarbons, preferably from a natural gas stream, the process comprising the following steps:
(a) providing the input gas stream containing hydrocarbons, preferably the natural gas stream, at a pressure between 20 and 80 bara, preferably between 35 and 65 bara, most preferably between 40 and 60 bara;
(b) adding a first process steam stream to the input gas stream to obtain a first process gas mixture stream having a first steam-carbon ratio (S/C ratio);
(c) introducing the first process gas mixture stream into a pre-reforming stage comprising at least one pre-reforming reactor which is in the form of a shaft reactor and contains a bed of a catalyst active for pre-reforming; reacting the first process gas mixture stream in the pre-reforming stage under pre-reforming conditions to afford a pre-reformed process gas mixture stream having a proportion of higher hydrocarbons that is reduced relative to the first process gas mixture; discharging the pre-reformed process gas mixture stream from the pre-reforming stage;
(d) introducing the pre-reformed process gas mixture stream, a second process steam stream and an oxygen stream into an autothermal reforming reactor (ATR), wherein the ratio of the second process steam stream and the pre-reformed process gas mixed stream results in a second steam-carbon ratio between and including 0.5 to 2.5, preferably between and including 0.8 to 1.6, most preferably between and including 1.0 to 1.4; reacting the pre-reformed process gas mixture stream, the second process steam stream and the oxygen in the ATR under conditions of autothermal reforming to afford a hot raw synthesis gas stream comprising hydrogen (H₂), carbon monoxide (CO), carbon dioxide (CO₂) and unconverted hydrocarbons, discharging the hot raw synthesis gas stream from the ATR;
(e) introducing the hot raw synthesis gas stream into a waste heat boiler, cooling the hot raw synthesis gas stream in the waste heat boiler to a temperature of less than 400 °C, preferably less than 350 °C, to form a cooled raw synthesis gas stream and a steam product stream, discharging the cooled raw synthesis gas stream and the steam product stream from the waste heat boiler;
(f) introducing the cooled raw synthesis gas stream and a third process steam stream into a high-temperature CO conversion stage (HT shift stage) containing a catalyst active for high-temperature CO conversion, reacting the cooled raw synthesis gas stream in the HT shift stage under conditions of high-temperature CO conversion to afford a first converted synthesis gas stream, discharging the first converted synthesis gas stream from the HT shift stage;
(g) introducing the first converted synthesis gas stream into a low-temperature CO conversion stage (LT shift stage) containing a catalyst active for low-temperature CO conversion, reacting the first converted synthesis gas stream in the LT shift stage under conditions of low-temperature CO conversion to afford a second converted synthesis gas stream, discharging the second converted synthesis gas stream from the LT shift stage;
(h) introducing the second converted synthesis gas stream into a CO₂ separation apparatus configured as a physical gas scrubbing with methanol as the scrubbing medium, contacting the second converted synthesis gas stream in the CO₂ separation apparatus with the scrubbing medium under conditions of physical gas scrubbing, discharging a CO₂-depleted synthesis gas stream as a hydrogen-rich synthesis gas stream and a CO₂-rich gas stream from the CO₂ separation apparatus;
(i) wherein the process comprises no further reforming step in a steam reformer with catalyst-filled reformer tubes heated using burners.

The process for producing the hydrogen-rich synthesis gas stream from the input gas stream containing hydrocarbons, preferably from the natural gas stream according to the present Invention is of advantage in that the hydrogen-rich synthesis gas stream discharged from the CO₂ separation apparatus has a high H₂ content (around 95%-vol) without requiring further hydrogen enrichment apparatuses, which is enabled due to a high conversion in the autothermal reforming reactor (ATR). The employed reforming process is robust and simple, and no further reforming steps in a classical steam reformer with catalyst-filled reformer tubes are required. A high maximum capacity of the autothermal reforming reactor (ATR) enables a single train to produce up to 1 000 000 normal cubic meter per hour (Nm³/h) of low carbon fuel gas (corresponding to an approximate 3 Giga Watt). Since the autothermal reforming reactor (ATR) is further capable of operating at a higher pressure, a compact design is achieved not only for the autothermal reforming reactor (ATR) but also for the CO₂ separation apparatus, thereby reducing cost and physical footprint of the process. The product stream has a high-pressure and is ready to be distributed without requiring any additional compression. The process provides an economic provision of a low carbon energy carrier that is especially suited for large scale production. The process is simpler and lesser expensive compared to existing solutions as the process produces hydrogen-rich synthesis gas stream at above 95 % purity with no further hydrogen enrichment steps.

According to a second aspect, the present invention provides a plant for producing a hydrogen-rich synthesis gas stream from an input gas stream containing hydrocarbons, preferably from a natural gas stream, the plant comprising the following constituents in fluid connection with one another:
(a) means for providing the input gas stream containing hydrocarbons, preferably the natural gas stream, at a pressure between 20 and 80 bara, preferably between 35 and 65 bara, most preferably between 40 and 60 bara;
(b) means for adding a first process steam stream to the compressed input gas stream;
(c) a pre-reforming stage comprising at least one pre-reforming reactor which is configured as a shaft reactor and contains a bed of a catalyst active for the pre-reforming, means for introducing the first process gas mixture stream into the pre-reforming stage; means for discharging the pre-reformed process gas mixture stream from the pre-reforming stage;
(d) an autothermal reforming reactor (ATR), means for introducing the pre-reformed process gas mixture stream, a second process steam stream and an oxygen stream into the autothermal reforming reactor, means for discharging a hot raw synthesis gas stream containing hydrogen (H₂), carbon monoxide (CO), carbon dioxide (CO₂) and unconverted hydrocarbons from the autothermal reforming reactor;
(e) a waste heat boiler, means for introducing the hot raw synthesis gas stream into the waste heat boiler, means for discharging a cooled raw synthesis gas stream and a steam product stream from the waste heat boiler;
(f) a high-temperature CO conversion stage (HT shift stage) containing a catalyst active for the high-temperature CO conversion, means for introducing the cooled raw synthesis gas and a third process steam stream into the HT shift stage, means for discharging a first converted synthesis gas stream from the HT shift stage;
(g) a low-temperature CO conversion stage (LT shift stage) containing a catalyst active for the low-temperature CO conversion, means for introducing the first converted synthesis gas stream into the LT shift stage, means for discharging a second converted synthesis gas stream from the LT shift stage;
(h) a CO₂ separation apparatus configured as a physical gas scrubbing with methanol as the scrubbing medium, means for introducing the second converted synthesis gas stream into the CO₂ separation apparatus, means for discharging a CO₂-depleted synthesis gas stream as a hydrogen-rich synthesis gas stream and a CO₂-rich gas stream from the CO₂ separation apparatus; wherein
(i) the plant comprises no steam reformer with catalyst-filled reformer tubes heated using burners;
(j) the plant comprises no further hydrogen enrichment apparatuses.

The plant for producing the hydrogen-rich synthesis gas stream from the input gas stream containing hydrocarbons, preferably from the natural gas stream according to the present Invention is of advantage in that the hydrogen-rich synthesis gas stream exiting the CO₂ separation apparatus has a high H₂ content (around 95%-vol) without requiring further hydrogen enrichment apparatuses, which is enabled due to a high conversion in the autothermal reforming reactor (ATR). The employed reforming plant is robust and simple, and no further reforming apparatuses like a classical steam reformer with catalyst-filled reformer tubes are required. A high maximum capacity of the autothermal reforming reactor (ATR) enables a single train to produce up to 1 000 000 normal cubic meter per hour (Nm³/h) of low carbon fuel gas (corresponding to an approximate 3 Giga Watt). Since the autothermal reforming reactor (ATR) is further capable of operating at a higher pressure, a compact design is achieved not only for the autothermal reforming reactor (ATR), but also for the CO₂ separation apparatus, thereby reducing cost and physical footprint of the plant. The steam product stream has a high-pressure and is ready to be distributed without requiring any additional compression. The plant provides an economic provision of a low carbon energy carrier that is especially suited for large scale production.

Embodiments of the present invention eliminate the aforementioned drawbacks in existing known approaches by minimizing the amount of carbon dioxide formed during the synthesis gas production by utilizing a single auto thermal reactor (ATR) and a two-step shifting process to produce a hydrogen based fuel gas containing only a small amount of hydrocarbons.

Additional aspects, advantages, features and objects of the present invention are made apparent from the drawings and the detailed description of the illustrative embodiments construed in conjunction with the appended claims that follow. It will be appreciated that features of the present Invention are susceptible to being combined in various combinations without departing from the scope of the present invention as defined by the appended claims.

### BRIEF DESCRIPTION OF THE DRAWINGS

The summary above, as well as the following detailed description of illustrative embodiments, is better understood when read in conjunction with the appended drawings. To illustrate the present Invention, exemplary constructions of the invention are shown in the drawings. However, the present invention is not limited to specific methods and instrumentalities disclosed herein. Moreover, those skilled in the art will understand that the drawings are not to scale. Wherever possible, the same elements have been indicated by identical numbers. Embodiments of the present invention will now be described, by way of example only, with reference to the following diagrams wherein:
**FIG. 1** is a block diagram of a plant for producing a hydrogen-rich synthesis gas stream from an input gas stream containing hydrocarbons, preferably from a natural gas stream, with minimized emissions of carbon dioxide according to an embodiment of the present invention;
**FIG. 2** is a block diagram of a plant for producing a hydrogen-rich synthesis gas stream from an input gas stream containing hydrocarbons, preferably from a natural gas stream, with a reforming step according to an embodiment of the present invention; and
**FIG. 3** is a block diagram of a plant for producing a hydrogen-rich synthesis gas stream from an input gas stream containing hydrocarbons, preferably from a natural gas stream, including recycling an off-gas stream according to an embodiment of the present invention.

### DETAILED DESCRIPTION OF EMBODIMENTS

The following detailed description illustrates embodiments of the present invention and ways in which they can be implemented. Although some modes of carrying out the present Invention have been disclosed, those skilled in the art would recognize that other embodiments for carrying out or practicing the present invention are also possible.

As used herein, several terms are defined below:
Autothermal reforming (ATR) conditions and carbon monoxide (CO) shift conversion conditions are known to those skilled in the art from the prior art. These are the physicochemical conditions under which a measurable, preferably industrially relevant, conversion of hydrocarbons to synthesis gas products is achieved. For example, ATR conditions generally comprise operating temperatures of 950 to 1050 °C, a pressure of 30 to 50 bara, a steam-to-carbon molar ratio (S/C ratio) of 0.5 to 1.5, and an, in an ATR reactor comprising an ATR active catalyst. Necessary adjustments of these conditions to the respective operational requirements will be made by those skilled in the art on the basis of routine experiments. Any specific reaction conditions disclosed may serve here as a guide, but they should not be regarded as limiting in relation to the scope of the invention.

High-temperature CO conversion (HT shift) conditions usually comprise operating the HT shift stage at temperatures of 350 to 420 °C with a catalyst active for HT shift, for example an iron/chromium oxide based catalyst, whereas low-temperature CO conversion (LT shift) conditions usually comprise operating the LT shift stage at temperatures of 180 to 340 °C with a catalyst active for LT shift, for example a Cu-ZnO/Al₂O₃ catalyst.

Pressures, if any, are reported in absolute pressure units, bara for short, unless otherwise stated in the particular individual context.

A fluid connection between two regions of the apparatus or plant according to the invention is to be understood as meaning any type of connection whatsoever which makes it possible for a fluid, for example a gas stream, to flow from one to the other of the two regions, neglecting any interposed regions or components. In particular, a direct fluid connection is to be understood as meaning any type of connection whatsoever which makes it possible for a fluid, for example a gas stream, to flow directly from one to the other of the two regions, wherein no further regions or components are interposed with the exception of purely transportational operations and the means required therefor, for example pipelines, valves, pumps, compressors, reservoirs. One example would be a pipeline or a duct leading directly from one to the other of the two regions.

A means is to be understood as meaning something that enables or is helpful in the achievement of a goal. In particular, means for performing a particular process step are to be understood as meaning any physical articles that would be considered by a person skilled in the art in order to be able to perform this process step. For example, a person skilled in the art will consider means of introducing or discharging a material stream to include any transporting and conveying apparatuses, i.e., for example pipelines, pumps, compressors, valves, which seem necessary or sensible to said skilled person for performance of this process step on the basis of his knowledge of the art.

For the purposes of this description, steam is to be understood as being synonymous with water vapor unless the opposite is indicated in an individual case. By contrast, the term "water" refers to water in the liquid state of matter unless otherwise stated in an individual case.

For the purposes of this description, higher hydrocarbons are to be understood as being synonymous with all hydrocarbons comprising more than one carbon atom per molecule.

In the context of the present invention, carbon dioxide separation conditions refer to the specific conditions of a selected physical or chemical carbon dioxide separation process which are known to a skilled person. A physical or chemical carbon dioxide separation process is understood to be a process that enables a fluid mixture, for example a gas mixture, to be separated into its components or undesirable components to be separated from this mixture by applying suitable physicochemical conditions, for example by phase transition such as condensation or by using a suitable sorbent. When a sorption process is used, it may be based on adsorption, i.e., binding of the substance or sub-stances to be separated to a surface or interface of the solid adsorbent, or on absorption, i.e., uptake of the substance or substances to be separated into the volume of the liquid or solid adsorbent. The substance or substances separated and bound by means of sorption are referred to as adsorbate or absorbate. The binding forces acting in this process can be of a physical or chemical nature. Accordingly, weaker, non-specific binding forces, e.g. van der Waals forces, usually act in physical sorption, whereas stronger, more specific binding forces act in chemical sorption and the adsorbate and/or absorbent is chemically changed.

As synonyms for the term absorbent, the terms absorbent or washing agent in the case of liquid absorbents are used in the context of the present Invention.

A specific, physical absorption process is the gas scrubbing with cryogenic methanol, which uses methanol as absorbent or scrubbing agent, the temperature of which has been cooled by means of cold-generating processes below ambient temperature, preferably below 0 °C, most preferably below - 30 °C. This process is known to the skilled person as the Rectisol process.

According to a first aspect, the present invention provides a process producing a hydrogen-rich synthesis gas stream from an input gas stream containing hydrocarbons, preferably from a natural gas stream, the process comprising the following steps:
(a) providing the input gas stream containing hydrocarbons, preferably the natural gas stream, at a pressure between 20 and 80 bara, preferably between 35 and 65 bara, most preferably between 40 and 60 bara;
(b) adding a first process steam stream to the input gas stream to obtain a first process gas mixture stream having a first steam-carbon ratio (S/C ratio);
(c) introducing the first process gas mixture stream into a pre-reforming stage comprising at least one pre-reforming reactor which is in the form of a shaft reactor and contains a bed of a catalyst active for pre-reforming; reacting the first process gas mixture stream in the pre-reforming stage under pre-reforming conditions to afford a pre-reformed process gas mixture stream having a proportion of higher hydrocarbons that is reduced relative to the first process gas mixture; discharging the pre-reformed process gas mixture stream from the pre-reforming stage;
(d) introducing the pre-reformed process gas mixture stream, a second process steam stream and an oxygen stream into an autothermal reforming reactor (ATR), wherein the ratio of the second process steam stream and the pre-reformed process gas mixed stream results in a second steam-carbon ratio between and including 0.5 to 2.5, preferably between and including 0.8 to 1.6, most preferably between and including 1.0 to 1.4; reacting the pre-reformed process gas mixture stream, the second process steam stream and the oxygen in the ATR under conditions of autothermal reforming to afford a hot raw synthesis gas stream comprising hydrogen (H₂), carbon monoxide (CO), carbon dioxide (CO₂) and unconverted hydrocarbons, discharging the hot raw synthesis gas stream from the ATR;
(e) introducing the hot raw synthesis gas stream into a waste heat boiler, cooling the hot raw synthesis gas stream in the waste heat boiler to a temperature of less than 400 °C, preferably less than 350 °C, to form a cooled raw synthesis gas stream and a steam product stream, discharging the cooled raw synthesis gas stream and the steam product stream from the waste heat boiler;
(f) introducing the cooled raw synthesis gas stream and a third process steam stream into a high-temperature CO conversion stage (HT shift stage) containing a catalyst active for high-temperature CO conversion, reacting the cooled raw synthesis gas stream in the HT shift stage under conditions of high-temperature CO conversion to afford a first converted synthesis gas stream, discharging the first converted synthesis gas stream from the HT shift stage;
(g) introducing the first converted synthesis gas stream into a low-temperature CO conversion stage (LT shift stage) containing a catalyst active for low-temperature CO conversion, reacting the first converted synthesis gas stream in the LT shift stage under conditions of low-temperature CO conversion to afford a second converted synthesis gas stream, discharging the second converted synthesis gas stream from the LT shift stage;
(h) introducing the second converted synthesis gas stream into a CO₂ separation apparatus configured as a physical gas scrubbing with methanol as the scrubbing medium, contacting the second converted synthesis gas stream in the CO₂ separation apparatus with the scrubbing medium under conditions of physical gas scrubbing, discharging a CO₂-depleted synthesis gas stream as a hydrogen-rich synthesis gas stream and a CO₂-rich gas stream from the CO₂ separation apparatus;
(i) wherein the process comprises no further reforming step in a steam reformer with catalyst-filled reformer tubes heated using burners.

The process for producing the hydrogen-rich synthesis gas stream from the input gas stream containing hydrocarbons, preferably from the natural gas stream, according to the present invention is of advantage in that the hydrogen-rich synthesis gas stream discharged from the CO₂ separation apparatus has a high H₂ content (around 95 %-vol) without requiring further hydrogen enrichment apparatuses, which is enabled due to a high conversion in the auto thermal reactor (ATR). A high maximum capacity of the auto thermal reactor (ATR) enables a single train to produce up to 1 000 000 normal cubic meter per hour (Nm³/h) of low carbon fuel gas (corresponding to an approximate 3 Giga Watt). Since the auto thermal reactor (ATR) is further capable of operating at a higher pressure, a compact design is achieved not only for the auto thermal reactor (ATR), but also for the CO₂ separation apparatus, thereby reducing cost and physical footprint of the process. The steam product stream has a high-pressure and is ready to be distributed without requiring any additional compression. The process provides an economic provision of a low carbon energy carrier that is especially suited for large scale production. The process is simpler and less expensive compared to existing solutions as the process produces hydrogen-rich synthesis gas stream at above 95% purity with no further hydrogen enrichment steps.

If sulfur compounds are present in the natural gas stream, hydrogen (H₂) may be admixed to the natural gas stream before performing compression. Optionally, the compressed natural gas stream is preheated to 350 °C to 400 °C before being routed to the at least one reactor for hydrodesulfurization, whereby any organic sulfur is converted to hydrogen sulfide (H₂S) before all H₂S is being adsorbed. In case, the compressed natural gas stream has a low sulfur content but high enough to poison a downstream catalyst, an injection unit for dosing a sulfur compound (e.g. dimethyl disulfide or dimethyl sulfide) may be installed to maintain a minimum required sulfur content in order to keep at least one reactor for hydrodesulfurization activated. A simple adsorption bed may be installed in place of the injection unit.

Optionally, upon reacting the first process gas mixture stream in the pre-reforming stage, hydrocarbons in the first process gas mixture undergo a reforming reaction to produce carbon monoxide (CO), carbon dioxide (CO₂) and hydrogen (H₂). The pre-reformed process gas mixture stream contains only C₁ hydrocarbons. Higher hydrocarbons are only comprised in trace amounts, if any. To increase the hydrogen yield, the steam-carbon ratio of the pre-reforming stage may be increased to > 1 (e.g. 1.2 - 1.3) as compared to a normal 0.6 - 0.8 for ATR based synthesis gas generation plants.

The hot raw synthesis gas stream may be at a temperature of up to 1050 °C, pressure up to 80 bara, and contains mainly CO, CO₂, H₂, unconverted methane (C₁) and one or more inert gases such as Nitrogen (N₂). Optionally, the hot raw synthesis gas stream is cooled rapidly to about 330 °C in the waste heat boiler, whereby a steam product stream is raised at significantly higher pressure than ambient pressure. Optionally, the outlet temperature of the waste heat boiler is controlled by a set of internal bypass valves such that an optimum inlet temperature to the HT shift stage can be achieved.

Optionally, the steam product stream is superheated in one or more second burners, for example in a fired heater, and is then used to generate power and drive steam turbines of machines in the plant.

Optionally, the catalyst used in the HT shift stage is an iron-based catalyst. The amount of process steam is optimized to (a) prevent over-reducing of the iron-based catalyst, and (b) increase the overall hydrogen yield of the plant.

Optionally, the first converted synthesis gas stream from the HT shift stage is routed to preheat a feed gas for the HDS and to preheat a boiler feed water. The temperature of the first converted synthesis gas stream is controlled at around 190 °C by means of a bypass around the boiler feed water preheater.

Optionally, the LT shift stage performs further conversion of CO to CO₂. As a result, a higher yield of hydrogen is achieved and at the same time, the overall carbon capture rate is increased. At least a part of the heat contained in the second converted synthesis gas stream from the LT shift stage is recovered by preheating boiler feed water and other process streams to a final shifted gas temperature of 40 °C before being routed to the CO₂ separation apparatus. The purity of the oxygen stream may vary between 95.0 to 99.5 %-vol.

Optionally, the CO₂ stream discharged from the CO₂ separation apparatus is compressed for storage. Depending on requirements, the CO₂ stream can be supplied as a liquid product.

For carbon capture steps that utilize a chemical absorption process or a physical absorption process, no pre-treatment is required and CO₂ is recovered from the hydrogen-rich synthesis gas stream. Optionally, for the carbon capture step utilizing a cryogenic step, a pre-treatment of the hydrogen-rich synthesis gas stream is required (e.g. drying, CO₂ stream enrichment, pressurization, cooling).

Optionally, the hydrogen-rich synthesis gas stream has a purity of more than 95%-vol and is supplied at a pressure of more than 30 bara. without secondary compression. For fuel gas distribution, the hydrogen-rich synthesis gas stream does not require further purification steps.

Optionally, the process comprises no further hydrogen enrichment steps, since the hydrogen-rich synthesis gas stream produced according to the invention can directly and as such be used for numerous applications, e. g. as fuel gas or reduction gas, without further hydrogen enrichment.

Optionally, the pre-reforming conditions, the first steam-carbon ratio, the second steam-carbon ratio, the conditions of the autothermal reforming, the conditions of the high-temperature CO conversion, the conditions of the low-temperature CO conversion and the conditions of the physical gas scrubbing are chosen such that the hydrogen-rich synthesis gas stream has a hydrogen content of at least 90 mol%, preferably of at least 95 mol%.

Optionally, the hydrogen-rich synthesis gas stream is at least partially, preferably completely, utilized as fuel gas.

Optionally, the hydrogen-rich synthesis gas stream is utilized as fuel gas and/or provided to consumers without further compression. This is effected by providing the input gas stream containing hydrocarbons, preferably the natural gas stream, at a pressure between 20 and 80 bara, preferably between 35 and 65 bara, most preferably between 40 and 60 bara, so that the hydrogen-rich synthesis gas stream can directly be supplied without further compression to processes that require a hydrogen-rich gas at elevated, significantly above ambient pressures as input or feed gas.

Optionally, before pre-reforming process step (c), the input gas stream containing hydrocarbons is supplied to a desulfurization stage, wherein the desulfurization stage comprises at least one reactor for hydrodesulfurization (HDS) and a sorption vessel containing an H₂S-selective sorbent, wherein a portion of the hydrogen-rich synthesis gas stream is used as the hydrogenating hydrogen for the hydrodesulfurization.

Optionally, before pre-reforming process step (c), the input gas stream containing hydrocarbons is heated to a temperature between 450 °C and 500 °C using a first heating apparatus, wherein the first heating apparatus is operated using at least one first burner and at least a portion of the hydrogen-rich synthesis gas stream is used in the at least one first burner as fuel gas. The at least one first burner generates CO₂. In order to reduce Scope 1 emission, the preheating of the pre-reformed process gas mixture stream to the autothermal reforming reactor (ATR) may be omitted.

Optionally, the pre-reformed process gas mixture stream is discharged from the pre-reforming stage and introduced into the autothermal reforming reactor without further heating. Introducing the pre-reformed process gas mixture stream into the ATR without further heating directly reduces CO₂ footprint of the process.

Optionally, through adjustment of the first process steam stream and/or the second process steam, the second steam-carbon ratio has a value between and including 0.5 to 2.5, preferably between and including 0.8 to 1.6, most preferably between and including 1.0 to 1.4.

Optionally, before performing process step (h) the second converted synthesis gas stream is cooled to a temperature of below 50 °C, preferably below 40 °C, in indirect heat exchange with a water stream.

Optionally, at least a portion of the steam product stream is superheated using a second heating apparatus, wherein the second heating apparatus is operated using at least one second burner and at least a portion of the hydrogen-rich synthesis gas stream is used as fuel gas in the at least one second burner. The overall carbon capture of the plant is increased to more than 90 %.

Optionally, at least a portion of the steam product stream and/or of the superheated steam product stream is utilized to generate electrical energy in a steam turbine.

Optionally, a portion of the hydrogen-rich synthesis gas stream is admixed with the input gas stream before process step (b).

Optionally, a further off-gas stream comprising carbon dioxide, hydrogen and methane is discharged from the CO₂ separation apparatus, wherein the further off-gas stream is at least partially recycled and introduced into the process upstream of process step (a). The further off-gas stream from the CO₂ separation apparatus is hydrogen rich and is recycled to the at least one reactor for HDS as a source of Hydrogen for hydrogenation reaction, as well as a means to recycle remaining CH₄ in the off-gas, thereby improving overall hydrogen yield.

Optionally, the process is a single-train process and has a production rate for the hydrogen-rich synthesis gas stream between zero and 1 000 000 Nm³/h, preferably between 300 000 Nm³/h and 1 000 000 Nm³/h, most preferably between 600 000 Nm³/h and 1 000 000 Nm³/h.

Optionally, during startup of the process, the production of one or more process steam streams is carried out using electrically operated heating apparatuses.

Optionally, the conditions of the autothermal reforming are selected such that the hot raw synthesis gas stream has a temperature of 900 °C or higher, preferably a temperature of 1000 °C or higher, most preferably a temperature of 1050 °C or higher.

Optionally, the hydrogen-rich synthesis gas stream is at least partially supplied to a hydrogen liquefaction plant.

Optionally, the process does not comprise a compression step between process steps (a) and (h). The hydrogen-rich synthesis gas stream is directly supplied without further compression to processes that require a hydrogen-rich gas at elevated, significantly above ambient pressures as input or feed gas.

Optionally, the process comprises a reforming step in a gas-heated reformer (GHR). The hot raw synthesis gas stream discharged from the ATR is used to heat the gas-heated reformer (GHR) having a parallel feed stream, thereby increasing overall efficiency of decarbonized fuel production.

According to a second aspect, the present Invention provides a plant for producing a hydrogen-rich synthesis gas stream from an input gas stream containing hydrocarbons, preferably from a natural gas stream, comprising the following constituents in fluid connection with one another:
(a) means for providing the input gas stream containing hydrocarbons, preferably the natural gas stream, at a pressure between 20 and 80 bara, preferably between 35 and 65 bara, most preferably between 40 and 60 bara;
(b) means for adding a first process steam stream to the compressed input gas stream;
(c) a pre-reforming stage comprising at least one pre-reforming reactor which is configured as a shaft reactor and contains a bed of a catalyst active for the pre-reforming, means for introducing the first process gas mixture stream into the pre-reforming stage; means for discharging the pre-reformed process gas mixture stream from the pre-reforming stage;
(d) an autothermal reforming reactor (ATR), means for introducing the pre-reformed process gas mixture stream, a second process steam stream and an oxygen stream into the autothermal reforming reactor, means for discharging a hot raw synthesis gas stream containing hydrogen (H₂), carbon monoxide (CO), carbon dioxide (CO₂) and unconverted hydrocarbons from the autothermal reforming reactor;
(e) a waste heat boiler, means for introducing the hot raw synthesis gas stream into the waste heat boiler, means for discharging a cooled raw synthesis gas stream and a steam product stream from the waste heat boiler;
(f) a high-temperature CO conversion stage (HT shift stage) containing a catalyst active for the high-temperature CO conversion, means for introducing the cooled raw synthesis gas and a third process steam stream into the HT shift stage, means for discharging a first converted synthesis gas stream from the HT shift stage;
(g) a low-temperature CO conversion stage (LT shift stage) containing a catalyst active for the low-temperature CO conversion, means for introducing the first converted synthesis gas stream into the LT shift stage, means for discharging a second converted synthesis gas stream from the LT shift stage;
(h) a CO₂ separation apparatus configured as a physical gas scrubbing with methanol as the scrubbing medium, means for introducing the second converted synthesis gas stream into the CO₂ separation apparatus, means for discharging a CO₂-depleted synthesis gas stream as a hydrogen-rich synthesis gas stream and a CO₂-rich gas stream from the CO₂ separation apparatus; wherein
(i) the plant comprises no steam reformer with catalyst-filled reformer tubes heated using burners;
(j) the plant comprises no further hydrogen enrichment apparatuses.

The plant for producing the hydrogen-rich synthesis gas stream from the input gas stream containing hydrocarbons, preferably from the natural gas stream according to the present Invention is of advantage in that the hydrogen-rich synthesis gas stream exiting the CO₂ separation apparatus has a high H₂ content (around 95%-vol) without requiring further hydrogen enrichment apparatuses, which is enabled due to a high conversion in the autothermal reforming reactor (ATR). A high maximum capacity of the autothermal reforming reactor (ATR) enables a single train to produce up to 1 000 000 normal cubic meter per hour (Nm³/h) of low carbon fuel gas (corresponding to an approximate 3 Giga Watt). Since the autothermal reforming reactor (ATR) is further capable of operating at a higher pressure, a compact design is achieved not only for the autothermal reforming reactor (ATR), but also for the CO₂ separation apparatus, thereby reducing cost and physical footprint of the plant. The hydrogen-rich synthesis gas stream has a high pressure and is ready to be distributed to consumers without requiring any additional compression. The plant provides an economic provision of a low carbon energy carrier that is especially suited for large scale production.

Embodiments of the present Invention substantially eliminate or at least partially address the aforementioned technical drawbacks in existing technologies by minimizing the amount of carbon dioxide formed during the synthesis gas production by shifting synthesis gas out of the ATR via a two-step shift to achieve maximum conversion of the CO to CO₂ which in turn can be removed almost fully in a subsequent CO₂ removal unit for storage or utilization.

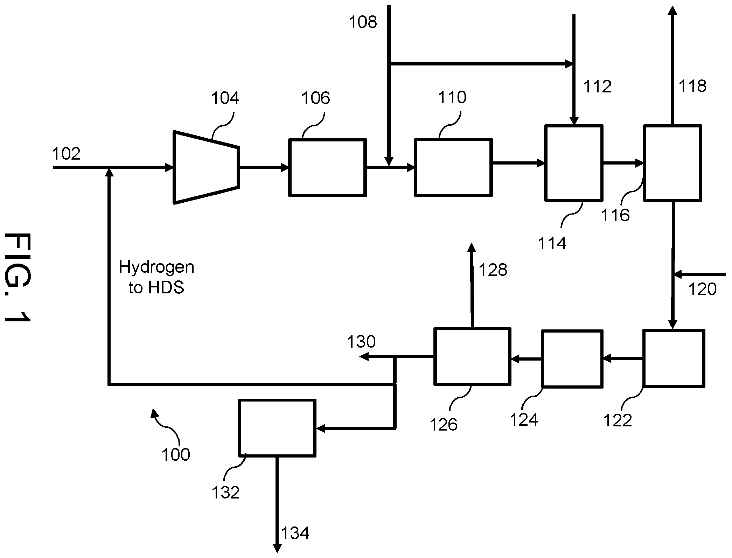

The following Table 1 describes an exemplary material balance of the plant described in FIG. 1. The carbon capture rate based on a natural gas (NG) feed is 92.6 %.

**Table 1:**

| | | NG to the Plant | Captured CO₂ Stream | Flue Gas (Scope 1) | Decarbonised Fuel (Scope 3) | Process Condensate (Scope 3) |
|---|---|---|---|---|---|---|
| Temperature | °C | 13.0 | 8.8 | 177.3 | 34.9 | 40.0 |
| Pressure | bar (g) | 39.0 | 1.1 | 1.1 | 31.1 | 5.5 |
| Mole Flows | kmol/h | 9046 | 9102 | 11554 | 22313 | 10130 |
| CH₃OH | kmol/h | 0.0 | 11.9 | 0.0 | 0.3 | 22.5 |
| H₂O | kmol/h | 0.0 | 0.0 | 3529.7 | 0.0 | 10107.7 |
| CO₂ | kmol/h | 157.2 | 8883.3 | 195.3 | 140.1 | 0.0 |
| CO | kmol/h | 0.0 | 2.8 | 0.0 | 200.3 | 0.0 |
| H₂ | kmol/h | 0.0 | 24.1 | 0.0 | 21763.6 | 0.0 |
| Ar | kmol/h | 0.0 | 0.3 | 91.4 | 23.3 | 0.0 |
| N₂ | kmol/h | 76.3 | 171.4 | 7430.8 | 67.2 | 0.0 |
| O₂ | kmol/h | 0.0 | 0.0 | 306.9 | 0.0 | 0.0 |
| CH₄ | kmol/h | 8246.5 | 8.5 | | 118.2 | 0.0 |
| C₂H₆ | kmol/h | 505.5 | | | | |
| C₃H₈ | kmol/h | 43.5 | | | | |
| C₄H₁₀-N | kmol/hr | 5.5 | | | | |
| C₄H₁₀-I | kmol/hr | 7.3 | | | | |
| C₅H₁₂-N | kmol/hr | 1.1 | | | | |
| C₅H₁₂-I | kmol/hr | 1.5 | | | | |
| C₆H₁₄ | kmol/hr | 1.6 | | | | |

The tables hereafter provide typical numbers for the plant implementation according to an embodiment of the present Invention and applying different pressures, steam-carbon ratios, preheating and ATR temperatures.

The following table 2 describes the influence of pressure on key parameters for an ATR setup according to an embodiment of the present Invention, keeping the inlet and outlet temperature constant at typical standard values as well as the steam-carbon ratio at 1.3.

**Table 2:**

| Parameter | Unit | | | | | | | | |
|---|---|---|---|---|---|---|---|---|---|
| ATR outlet pressure | bar (g) | 25 | 38 | 50 | 55 | 60 | 65 | 70 | 80 |
| estimated ATR diameter | | 138% | 113% | 100% | 96% | 92% | 89% | 87% | 81% |
| methane content in hydrogen product | %-vol | 0.3 | 0.7 | 1.1 | 1.3 | 1.6 | 1.8 | 2.1 | 2.6 |
| Carbon capture rate of plant setup | % | 94.3 | 93.2 | 91.8 | 91.1 | 90.4 | 89.7 | 88.9 | 87.3 |
| CO₂ footprint of product excl. power import | kgCO₂/ kgH₂ | 0.53 | 0.65 | 0.80 | 0.88 | 0.96 | 1.04 | 1.13 | 1.33 |
| Energy efficiency excl. power import | % | 73.5 | 72.8 | 72.3 | 72.1 | 71.9 | 71.7 | 71.6 | 71.2 |

The following Table 3 describes the influence of steam on key parameters for an ATR setup according to an embodiment of the present Invention, keeping the inlet and outlet temperature constant at typical standard values as well as the pressure at 60 bar.

**Table 3:**

| Parameter | Unit | | | | | |
|---|---|---|---|---|---|---|
| ATR steam-carbon ratio | mol/mol | 0.87 | 1.08 | 1.28 | 1.49 | 1.69 |
| Methane content in hydrogen product | %-vol | 2.6 | 2.0 | 1.6 | 1.3 | 1.0 |
| Carbon capture rate of plant setup | % | 87.5 | 89.1 | 90.4 | 91.4 | 92.2 |
| CO₂ footprint of product excluding power import | kgCO₂ / kgH₂ | 1.26 | 1.09 | 0.96 | 0.86 | 0.79 |
| Energy efficiency excluding power import | % | 73.9 | 72.9 | 71.9 | 71.0 | 70.0 |

The following Table 4 describes the influence of feed preheat on key parameters for an ATR setup according to an embodiment of the present Invention, keeping the outlet temperature constant as well as the pressure at 60 bar(g) while changing the inlet temperature from the standard temperature T1 to T2 being 270 K lower.

The following Table 5 describes the influence of ATR exit temperature on key parameters for an ATR setup according to an embodiment of the present Invention while keeping the inlet temperature constant at the lower T2 and the pressure at 60 bar(g) and changing the outlet temperature from the standard temperature T3 to T4=T3-100K.

**Table 4:**

| Parameter | Unit | | |
|---|---|---|---|
| Feed preheating before ATR | °C | T1 | T2 |
| ATR steam-carbon ratio | mol/mol | 1.28 | 1.32 |
| Methane content in hydrogen product | %-vol | 1.6 | 1.3 |
| Carbon capture rate of plant setup | % | 90.4 | 91.0 |
| CO₂ footprint of product excluding power import | kgCO₂ / kgH₂ | 0.96 | 0.89 |
| Energy efficiency excluding power import | % | 71.9 | 72.0 |

**Table 5:**

| Parameter | Unit | | |
|---|---|---|---|
| ATR outlet temperature | °C | T3 | T4 |
| ATR steam-carbon ratio | mol/mol | 1.32 | 1.27 |
| methane content in hydrogen product | %-vol | 1.3 | 5.8 |
| carbon capture rate of plant setup | % | 91.0 | 82.1 |
| CO₂ footprint of product excluding power import | kgCO₂ / kgH₂ | 0.89 | 1.96 |
| Energy efficiency excluding power import | % | 72.0 | 75.2 |

### DETAILED DESCRIPTION OF THE DRAWINGS

**FIG. 1** is a block diagram of a plant **100** for producing a hydrogen-rich synthesis gas stream from an input gas stream containing hydrocarbons, preferably from a natural gas stream, with minimized emissions of carbon dioxide according to an embodiment of the present invention. The plant **100** includes a natural gas providing means **102,** a natural gas compression means **104,** one or more reactors for hydrodesulfurization (HDS) **106,** a first process steam stream introducing means **108,** a pre-reforming stage **110,** an oxygen stream introducing means **112,** an autothermal reforming reactor (ATR) **114,** a waste heat boiler **116,** a cooled raw synthesis gas stream discharging means, a steam product stream discharging means **118,** a third process steam introducing means **120,** a high-temperature CO conversion stage (HT shift stage) **122,** a low-temperature CO conversion stage (LT shift stage) **124,** a CO₂ separation apparatus **126,** a CO₂ discharging means **128,** a hydrogen-rich synthesis gas stream discharging means **130,** a means **132** for superheating the steam product stream with one or more second burners **132** and a flue gas discharging means **134.**

The hydrogen-rich synthesis gas stream is produced by providing the input gas stream containing hydrocarbons, preferably the natural gas stream, through the input gas stream providing means **102** to the natural gas compression unit **104** to compress the input gas stream to a pressure between and including 20 and 80 bara, preferably between and including 35 and 65 bara, most preferably between and including 40 and 60 bara. Optionally, the compressed input gas stream is introduced into the one or more reactors for hydrodesulfurization (HDS) **106.** A first process steam stream is added to the compressed and desulfurized input gas stream downstream of the reactors for hydrodesulfurization (HDS) **106** through the first process steam stream introducing means **108** to obtain a first process gas mixture stream. The first process gas mixture stream is introduced into the pre-reforming stage **110** through the first process gas mixture stream introducing means and a pre-reformed process gas mixture stream is discharged from the pre-reforming stage **110** through the pre-reformed process gas mixture stream discharging means. The pre-reforming stage **110** comprises one or more pre-reforming reactors that are configured as a shaft reactor and contains a bed of a catalyst active for the pre-reforming. The pre-reformed process gas mixture stream is introduced into the autothermal reforming reactor (ATR) **114** through a pre-reformed process gas mixture stream introducing means along with a second process steam stream and an oxygen stream to produce a hot raw synthesis gas stream containing hydrogen (H₂), carbon monoxide (CO), carbon dioxide (CO₂) and unconverted hydrocarbons. The hot raw synthesis gas stream containing hydrogen (H₂), carbon monoxide (CO), carbon dioxide (CO₂) and unconverted hydrocarbons is discharged from the autothermal reforming reactor **114** through the hot raw synthesis gas stream discharging means. Optionally, upstream of the pre-reforming process in the pre-reforming stage **110,** the input gas stream containing hydrocarbons is supplied to a desulfurization stage, where the desulfurization stage comprises the one or more reactors for hydrodesulfurization (HDS) **106** and a sorption vessel containing an H₂S-selective sorbent, where a portion of the hydrogen-rich synthesis gas stream is used as the hydrogenating hydrogen for the hydrodesulfurization. Optionally, upstream of the pre-reforming stage **110,** the input gas stream containing hydrocarbons is heated to a temperature between 450 degrees Celsius and 500 degrees Celsius using a first heating apparatus, where the first heating apparatus is operated using at least one first burner and at least a portion of the hydrogen-rich synthesis gas stream is used in the at least one first burner as fuel gas. The pre-reformed process gas mixture stream is introduced into the autothermal reforming reactor (ATR) **114** through the pre-reformed process gas mixture stream introducing means. A second process steam stream is introduced into the autothermal reforming reactor (ATR) **114** through the second process steam stream introducing means. An oxygen stream is introduced into the autothermal reforming reactor (ATR) **114** through the oxygen stream introducing means **112.** A first portion of the first process steam stream is added to the oxygen stream and introduced into the autothermal reforming reactor (ATR) **114.** The oxygen stream may be preheated. The oxygen stream is added directly to the autothermal reforming reactor (ATR) **114** burner, whereby partial combustion of the pre-reformed process gas mixture stream occurs in the combustion chamber of the autothermal reforming reactor (ATR) **114.** Optionally, a further reforming reaction to convert a C₁ hydrocarbon takes place in the catalyst layers consisting of different reforming catalysts.

A hot raw synthesis gas stream containing hydrogen (H₂), carbon monoxide (CO), carbon dioxide (CO₂) and unconverted hydrocarbons is discharged from the ATR **114** through a hot raw synthesis gas stream discharging means.

The hot raw synthesis gas stream is introduced into the waste heat boiler **116** through a hot raw synthesis gas stream introducing means. A cooled raw synthesis gas stream and the steam product stream are discharged from the waste heat boiler **116** through the steam product stream discharging means **118.** The cooled raw synthesis gas is introduced into the HT shift stage **122** through a cooled raw synthesis gas introducing means. A third process steam stream is introduced into the HT shift stage **122** through the third process steam stream introducing means **120.** The HT shift stage **122** includes a catalyst active for the high-temperature CO conversion. CO reacts with the third process steam stream to form CO₂ and H₂. A first converted synthesis gas stream is discharged from the HT shift stage **122** through a first converted synthesis gas stream discharging means. The LT shift stage **124** contains a catalyst active for the low-temperature CO conversion. The first converted synthesis gas stream is introduced into the LT shift stage **124** through a first converted synthesis gas stream introducing means. A second converted synthesis gas stream is discharged from the LT shift stage **124** through a second converted synthesis gas stream discharging means.

The CO₂ separation apparatus **126** is configured as a physical gas scrubbing with methanol as the scrubbing medium. The second converted synthesis gas stream is introduced into the CO₂ separation apparatus **126** through a second converted synthesis gas stream introducing means. A CO₂-depleted synthesis gas stream is discharged as a hydrogen-rich synthesis gas stream from the CO₂ separation apparatus **126** through the hydrogen-rich synthesis gas stream discharging means **130** and a CO₂-rich gas stream is discharged from the CO₂ separation apparatus **126** through CO₂ discharging means **128.** The plant **100** comprises no catalyst-filled reformer tubes that are heated using burners. Optionally, the CO₂ separation apparatus **126** includes either a physical wash absorption or chemical wash absorption (e.g., using an amine comprising solvent) or a or a cryogenic separation, whereby more than 95 % of CO₂ in the second converted synthesis gas stream is removed, resulting in an overall carbon capture rate of the entire H₂ production chain of more than 90 %. The plant **100** comprises no further hydrogen enrichment apparatuses.

Optionally, a portion of the steam product stream is superheated using a second heating apparatus, where the second heating apparatus **132** is operated using the one or more second burners and a portion of the hydrogen-rich synthesis gas stream is used as fuel gas in the one or more second burners. Optionally, the hydrogen-rich synthesis gas stream replaces natural gas fuel in order to further reduce overall carbon emission of the plant **100.** The flue gas from the heating apparatus **132** is discharged using the flue gas discharging means **134.**

The plant is of advantage that the hydrogen-rich synthesis gas stream exiting the CO₂ separation apparatus **126** has a high H₂ content (around 95 %-vol) without requiring further hydrogen enrichment apparatuses, which is due to a high conversion in the auto thermal reformer (ATR) **114.** A high maximum capacity of the auto thermal reformer (ATR) **114** enables a single train to produce up to 1 000 000 normal cubic meter per hour (Nm³/h) of low carbon fuel gas (corresponding to an approximate 3 Giga Watt).

Since the autothermal reformer (ATR) **114** is further capable of operating at a higher pressure, a compact design is achieved not only for the autothermal reformer (ATR) **114,** but also for the CO₂ separation apparatus **126,** thereby reducing cost and physical footprint of the plant **100.** The hydrogen-rich synthesis gas stream has high-pressure and is ready to be distributed without requiring any additional compression. The plant **100** provides an economic provision of a low carbon energy carrier that is especially suited for large scale production.

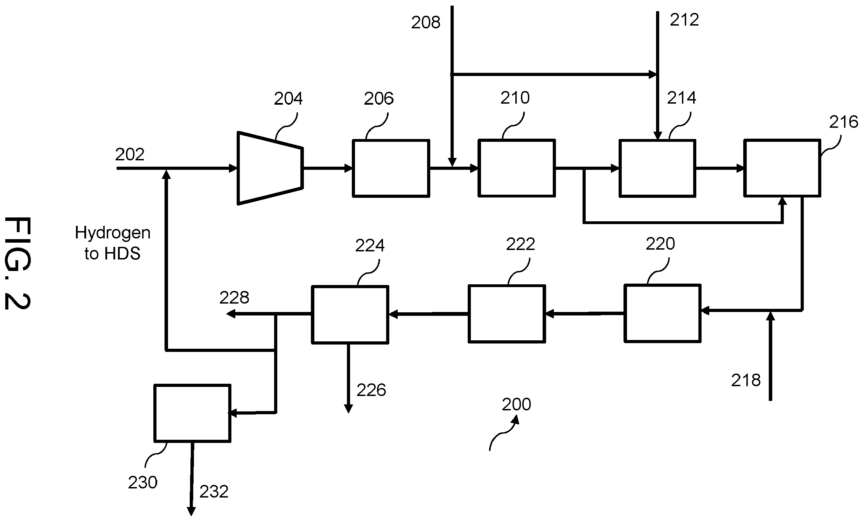

**FIG. 2** is a block diagram of a plant **200** for producing a hydrogen-rich synthesis gas stream from an input gas stream containing hydrocarbons, preferably from a natural gas stream, with a reforming step according to an embodiment of the present invention. The plant **200** includes a natural gas providing means **202,** a natural gas compression means **204,** one or more reactors for hydrodesulfurization (HDS) **206,** a first process steam stream introducing means **208,** a pre-reforming stage **210,** an oxygen stream introducing means **212,** an auto thermal reformer (ATR) **214,** a gas-heated reformer (GHR) **216,** a third process steam stream introducing means **218,** a high-temperature CO conversion stage (HT shift stage) **220,** a low-temperature CO conversion stage (LT shift stage) **222,** a CO₂ separation apparatus **224,** a CO₂ discharging means **226,** a hydrogen-rich synthesis gas stream discharging means **228,** a heating means with one or more second burners **230** and a flue gas discharging means **232.** The hydrogen-rich synthesis gas stream is produced by providing the input gas stream containing hydrocarbons, preferably a natural gas stream, at a pressure between 20 and 80 bara, preferably between 35 and 65 bara, most preferably between 40 and 60 bara through the input gas stream providing means **202** to the natural gas compression unit **204** to compress the input gas stream. A first process steam stream is added to the compressed input gas stream through the first process steam stream introducing means **208** to obtain a first process gas mixture stream. The first process gas mixture stream is introduced into the pre-reforming stage **210** through the first process gas mixture stream introducing means and a pre-reformed process gas mixture stream is discharged from the pre-reforming stage **210** through the pre-reformed process gas mixture stream discharging means. The pre-reforming stage **210** comprises one or more pre-reforming reactors that are configured as a shaft reactor and contains a bed of a catalyst active for the pre-reforming. The pre-reformed process gas mixture stream is introduced into the autothermal reforming reactor **214** through the pre-reformed process gas mixture stream introducing means along with a second process steam stream and an oxygen stream to produce a hot raw synthesis gas stream containing hydrogen (H₂), carbon monoxide (CO), carbon dioxide (CO₂) and unconverted hydrocarbons. The hot raw synthesis gas stream containing hydrogen (H₂), carbon monoxide (CO), carbon dioxide (CO₂) and unconverted hydrocarbons is discharged from the autothermal reforming reactor (ATR) **214** through the hot raw synthesis gas stream discharging means. Optionally, upstream of the pre-reforming stage **210,** the input gas stream containing hydrocarbons is supplied to a desulfurization stage, where the desulfurization stage comprises the one or more reactors for hydrodesulfurization **206** and a sorption vessel containing an H₂S-selective sorbent, where a portion of the hydrogen-rich synthesis gas stream is used as the hydrogenating hydrogen for the hydrodesulfurization.

Optionally, upstream of the pre-reforming stage **210,** the input gas stream containing hydrocarbons is heated to a temperature between 450 °C and 500 °C using a first heating apparatus, where the first heating apparatus is operated using at least one first burner and at least a portion of the hydrogen-rich synthesis gas stream is used in the at least one first burner as fuel gas.

The at least one first burner generates CO₂-emissions. In order to reduce Scope 1 emission, the preheating of the feed to the auto thermal reformer (ATR) may be omitted. Optionally, the pre-reformed process gas mixture stream is discharged from the pre-reforming stage and introduced into the auto thermal reformer (ATR) without further heating. Introducing the pre-reformed process gas mixture stream into the auto thermal reformer (ATR) **214** without further heating directly reduces CO₂ footprint of the plant 200.

The pre-reformed process gas mixture stream is introduced into the auto thermal reformer (ATR) **214** through a pre-reformed process gas stream introducing means. The second process steam stream is introduced into the auto thermal reformer (ATR) **214** through a second process steam stream introducing means. An oxygen stream is introduced into the auto thermal reformer (ATR) **214** through the oxygen stream introducing means **212.** A first portion of the first process steam stream is added to the oxygen stream and introduced into the autothermal reforming reactor (ATR) **214.** Optionally, the oxygen stream may be preheated. The oxygen stream is added directly to the auto thermal reformer (ATR) **214** burner, whereby partial combustion of the pre-reformed process gas mixture stream occurs in the combustion chamber of the auto thermal reformer (ATR) **214.** Optionally, a further reforming reaction to convert a C₁ hydrocarbon takes place in the catalyst layers consisting of different reforming catalysts. A hot raw synthesis gas stream containing hydrogen (H₂), carbon monoxide (CO), carbon dioxide (CO₂) and unconverted hydrocarbons is discharged from the auto thermal reformer (ATR) **214** through a hot raw synthesis gas stream discharging means. The hot raw synthesis gas stream is introduced into the GHR **216** through a hot raw synthesis gas stream introducing means. Optionally, the GHR **216** is configured to perform a reforming step. The HT shift stage **220** includes a catalyst active for the high-temperature CO conversion. The cooled raw synthesis gas is introduced into the HT shift stage **220** through a cooled raw synthesis gas introducing means. A third process steam stream is introduced into the HT shift stage **220** through the third process steam stream introducing means **218.** A first converted synthesis gas stream is discharged from the HT shift stage **220** through a first converted synthesis gas stream discharging means. CO reacts with the third process steam stream to form CO₂ and H₂. The LT shift stage **222** contains a catalyst active for the low-temperature CO conversion. The first converted synthesis gas stream is introduced into the LT shift stage **222** through a first converted synthesis gas stream introducing means. A second converted synthesis gas stream is discharged from the LT shift stage **222** through a second converted synthesis gas stream discharging means. The CO₂ separation apparatus **224** is configured as a physical gas scrubbing with methanol as the scrubbing medium. The second converted synthesis gas stream is introduced into the CO₂ separation apparatus **224** through a second converted synthesis gas stream introducing means. A CO₂ depleted synthesis gas stream is discharged as a hydrogen-rich synthesis gas stream from the CO₂ separation apparatus **224** through the hydrogen-rich synthesis gas stream discharging means **228** and a CO₂-rich gas stream is discharged from the CO₂ separation apparatus **224** through CO₂ discharging means **226.** The plant **200** comprises no steam reformer. The plant comprises no catalyst-filled reformer tubes that are heated using burners.

Optionally, the CO₂ separation apparatus **224** includes either a physical wash absorption or chemical wash absorption (e.g., amine wash) or a cryogenic separation, whereby more than 95 % of CO₂ in the second converted synthesis gas stream is removed, resulting in an overall carbon capture rate of the entire H₂ production chain of more than 90 %. The plant **200** comprises no further hydrogen enrichment apparatuses.

Optionally, a portion of the steam product stream is superheated using a second heating apparatus, where the second heating apparatus **230** is operated using the one or more second burners and a portion of the hydrogen-rich synthesis gas stream is used as fuel gas in the one or more second burners. Optionally, the hydrogen-rich synthesis gas stream replaces natural gas fuel in order to further reduce overall carbon emission of the plant **200.** The second heating apparatus **230** discharges a flue gas using the flue gas discharging means **232.** The plant **200** provides an alternative setup, whereby the hot raw synthesis gas stream discharged from the auto thermal reformer (ATR) **214** is used to heat the GHR **216** having a parallel feed stream, thereby increasing overall efficiency of decarbonized fuel production.

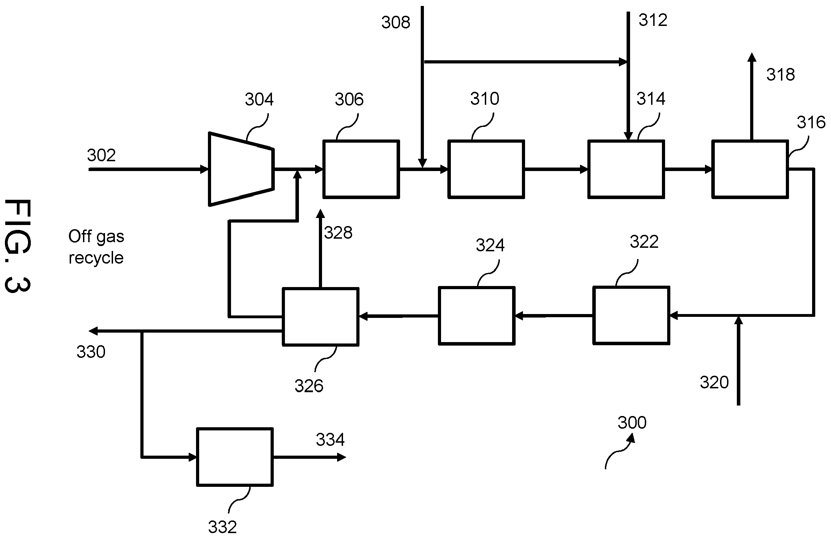

**FIG. 3** is a block diagram of a plant **300** for producing a hydrogen-rich synthesis gas stream from an input gas stream containing hydrocarbons, preferably from a natural gas stream, including recycling an off-gas stream according to an embodiment of the present Invention. The plant **300** includes a natural gas providing means **302,** a natural gas compression means **304,** one or more reactors for Hydro-Desulfurization **306,** a first process steam stream introducing means **308,** a pre-reforming stage **310,** an oxygen stream introducing means **312,** an auto thermal reformer (ATR) **314,** a waste heat boiler **316,** a cool raw synthesis gas stream discharging means, a steam product stream discharging means **318,** a third process steam stream introducing means **320,** a high-temperature CO conversion stage (HT shift stage) **322,** a low-temperature CO conversion stage (LT shift stage) **324,** a CO₂ separation apparatus **326,** a CO₂ discharging means **328,** a hydrogen-rich synthesis gas stream discharging means **330,** a heating apparatus with one or more second burners **332** and a flue gas discharging means **334.**

The hydrogen-rich synthesis gas stream is produced by providing the input gas stream containing hydrocarbons, preferably the natural gas stream, at a pressure between 20 and 80 bara, preferably between 35 and 65 bara, most preferably between 40 and 60 bara through the input gas stream providing means **302** to the natural gas compression unit **304** to compress the input gas stream. A first process steam stream is added to the compressed input gas stream through the first process steam stream introducing means **308** to obtain a first process gas mixture stream.

The first process gas mixture stream is introduced into the pre-reforming stage **310** through the first process gas mixture stream introducing means and a pre-reformed process gas mixture stream is discharged from the pre-reforming stage **310** through the pre-reformed process gas mixture stream discharging means. The pre-reforming stage **310** comprises one or more pre-reforming reactors that are configured as a shaft reactor and contains a bed of a catalyst active for the pre-reforming. The pre-reformed process gas mixture stream is introduced into the autothermal reforming reactor **314** through the pre-reformed process gas mixture stream introducing means along with a second process steam stream and an oxygen stream to produce a hot raw synthesis gas stream containing hydrogen (H₂), carbon monoxide (CO), carbon dioxide (CO₂) and unconverted hydrocarbons. The hot raw synthesis gas stream containing hydrogen (H₂), carbon monoxide (CO), carbon dioxide (CO₂) and unconverted hydrocarbons is discharged from the autothermal reforming reactor **314** through the hot raw synthesis gas stream discharging means.

Optionally, upstream of the pre-reforming stage **310,** the input gas stream containing hydrocarbons is supplied to a desulfurization stage, where the desulfurization stage comprises the one or more reactors for hydro-desulfurization **306** and a sorption vessel containing an H₂S-selective sorbent, where a portion of the hydrogen-rich synthesis gas stream is used as the hydrogenating hydrogen for the hydro-desulfurization.

Optionally, upstream of the pre-reforming stage **310,** the input gas stream containing hydrocarbons is heated to a temperature between 450 °C and 500 °C using a first heating apparatus, where the first heating apparatus is operated using at least one first burner and at least a portion of the hydrogen-rich synthesis gas stream is used in the at least one first burner as fuel gas. The at least one first burner generates CO₂-emissions.

In order to reduce Scope 1 emission, the preheating of the feed to the auto thermal reformer (ATR) may be omitted. Optionally, the pre-reformed process gas mixture stream is discharged from the pre-reforming stage and introduced into the auto thermal reformer (ATR) without further heating. Introducing the pre-reformed process gas mixture stream into the auto thermal reformer (ATR) **314** without further heating directly reduces CO₂ footprint of the plant **300.**

The pre-reformed process gas mixture stream is introduced into the auto thermal reformer (ATR) **314** through a pre-reformed process gas mixture stream introducing means. The second process steam stream is introduced into the auto thermal reformer (ATR) **314** through a second process steam stream introducing means. An oxygen stream is introduced into the auto thermal reformer (ATR) **314** through the oxygen stream introducing means **312.** A first portion of the first process steam stream is added to the oxygen stream and introduced into the autothermal reforming reactor (ATR) **314.** Optionally, the oxygen stream may be preheated. The oxygen stream is added directly to the auto thermal reformer (ATR) **314** burner, whereby partial combustion of the pre-reformed process gas mixture stream occurs in the combustion chamber of the auto thermal reformer (ATR) **314.** Optionally, a further reforming reaction to convert a C₁ hydrocarbon takes place in the catalyst layers consisting of different reforming catalysts.

A hot raw synthesis gas stream containing hydrogen (H₂), carbon monoxide (CO), carbon dioxide (CO₂) and unconverted hydrocarbons is discharged from the auto thermal reformer (ATR) **314** through a hot raw synthesis gas stream discharging means. The hot raw synthesis gas stream is introduced into the waste heat boiler **316** through a hot raw synthesis gas stream introducing means. A cooled raw synthesis gas stream is discharged from the waste heat boiler **316** towards HT shift stage **322** and a steam product stream is discharged from the waste heat boiler **316** through the steam product streamdischarging means **318.**

The HT shift stage **322** includes a catalyst active for the high-temperature CO conversion. The cooled raw synthesis gas is introduced into the HT shift stage **322** through a cooled raw synthesis gas introducing means. A third process steam stream is introduced into the HT shift stage **322** through the third process steam stream introducing means **320.** CO reacts with the third process steam stream to form CO₂ and H₂. A first converted synthesis gas stream is discharged from the HT shift stage **322** through a first converted synthesis gas stream discharging means. The LT shift stage **324** contains a catalyst active for the low-temperature CO conversion. The first converted synthesis gas stream is introduced into the LT shift stage **324** through a first converted synthesis gas stream introducing means. A second converted synthesis gas stream is discharged from the LT shift stage **324** through a second converted synthesis gas stream discharging means.

The CO₂ separation apparatus **326** is configured as a physical gas scrubbing with methanol as the scrubbing medium. The second converted synthesis gas stream is introduced into the CO₂ separation apparatus **326** through a second converted synthesis gas stream introducing means. A CO₂-depleted synthesis gas stream is discharged as a hydrogen-rich synthesis gas stream from the CO₂ separation apparatus **326** through the hydrogen-rich synthesis gas stream discharging means **330** and a CO₂-rich gas stream is discharged from the CO₂ separation apparatus **326** through CO₂ discharging means **328.** The plant **300** comprises no steam reformer. The plant does not comprise catalyst-filled reformer tubes that are heated using burners.

Optionally, the CO₂ separation apparatus **326** includes either a physical wash absorption or chemical wash absorption (e.g., an amine wash) or a cryogenic separation, whereby more than 95 % of CO₂ in the second converted synthesis gas stream is removed, resulting in an overall carbon capture rate of the entire H₂ production chain of more than 90 %. The plant **300** comprises no further hydrogen enrichment apparatuses.

Optionally, a portion of the steam product stream is superheated using a second heating apparatus, where the second heating apparatus **332** is operated using one or more second burners and a portion of the hydrogen-rich synthesis gas stream is used as fuel gas in the one or more second burners **332.** Optionally, the hydrogen-rich synthesis gas stream replaces natural gas fuel in order to further reduce overall carbon emission of the plant **300.** The second heating apparatus **332** discharge a flue gas using the flue gas discharging means **334.**

A further off-gas stream comprising carbon dioxide, hydrogen and methane is discharged from the CO₂ separation apparatus **326** through an off-gas stream discharging means, where the further off-gas stream is at least partially recycled and introduced into the process upstream of the natural gas providing means **302** through a further off-gas stream introducing means.

The plant **300** provides an alternative setup, whereby the further off-gas stream from the CO₂ separation apparatus **326** is hydrogen rich and is recycled to the one or more reactors for hydro-desulfurization **306** as a source of hydrogen for hydrogenation reaction, as well as a means to recycle the remaining CH₄ in the off-gas, thereby improving overall hydrogen yield of the plant **300.**

Modifications to embodiments of the present invention described in the foregoing are possible without departing from the scope of the present Invention as defined by the accompanying claims. Expressions such as "including", "comprising", "incorporating", "have", "is" used to describe, and claim the present Invention are intended to be construed in a non-exclusive manner, namely allowing for items, components or elements not explicitly described also to be present. Reference to the singular is also to be construed to relate to the plural.

### LIST OF REFERENCE NUMERALS

100, 200, 300 - plant
102, 202, 302 - natural gas providing means
104, 204, 304 - natural gas compression means
106, 206, 306 - one or more reactors for hydro-desulfurization
108, 208, 308 - first process steam stream introducing means
110, 210, 310 - pre-reforming stage 110
112, 212, 312 - oxygen stream introducing means
114, 214, 314 - the auto thermal reformer (ATR)
116, 316 - waste heat boiler
216 - gas-heated reformer (GHR)
118, 318 - steam product stream discharging means
120, 218, 320 - third process steam stream introducing means
122, 220, 322 - HT shift stage
124, 222, 324 - LT shift stage
126, 224, 326 - CO₂ separation apparatus
128, 226, 328 - CO₂ discharging means
130, 228, 330 - hydrogen-rich synthesis gas stream discharging means
132, 230, 332 - heating apparatus with one or more second burners
134, 232, 334 - flue gas discharging means

## Claims

1. Process for producing a hydrogen-rich synthesis gas stream from an input gas stream containing hydrocarbons, preferably from a natural gas stream, comprising the steps of:
(a) providing the input gas stream containing hydrocarbons, preferably the natural gas stream, at a pressure between 20 and 80 bara, preferably between 35 and 65 bara, most preferably between 40 and 60 bara;
(b) adding a first process steam stream to the input gas stream to obtain a first process gas mixture stream having a first steam-carbon ratio (S/C ratio);
(c) introducing the first process gas mixture stream into a pre-reforming stage (110, 210, 310) comprising at least one pre-reforming reactor which is in the form of a shaft reactor and contains a bed of a catalyst active for pre-reforming; reacting the first process gas mixture stream in the pre-reforming stage (110, 210, 310) under pre-reforming conditions to afford a pre-reformed process gas mixture stream having a proportion of higher hydrocarbons that is reduced relative to the first process gas mixture; discharging the pre-reformed process gas mixture stream from the pre-reforming stage (110, 210, 310);
(d) introducing the pre-reformed process gas mixture stream, a second process steam stream and an oxygen stream into an autothermal reforming reactor (ATR) (114, 214, 314), wherein the ratio of the second process steam stream and the pre-reformed process gas mixed stream results in a second steam-carbon ratio between and including 0.5 to 2.5, preferably between and including 0.8 to 1.6, most preferably between and including 1.0 to 1.4; reacting the pre-reformed process gas mixture stream, the second process steam stream and the oxygen in the ATR (114, 214, 314) under conditions of autothermal reforming to afford a hot raw synthesis gas stream comprising hydrogen (H₂), carbon monoxide (CO), carbon dioxide (CO₂) and unconverted hydrocarbons, discharging the hot raw synthesis gas stream from the ATR (114, 214, 314);
(e) introducing the hot raw synthesis gas stream into a waste heat boiler (116, 316), cooling the hot raw synthesis gas stream in the waste heat boiler (116, 316) to a temperature of less than 400 °C, preferably less than 350 °C, to form a cooled raw synthesis gas stream and a steam product stream, discharging the cooled raw synthesis gas stream and the steam product stream from the waste heat boiler (116, 316);
(f) introducing the cooled raw synthesis gas stream and a third process steam stream into a high-temperature CO conversion stage (HT shift stage, 122, 220, 322) containing a catalyst active for high-temperature CO conversion, reacting the cooled raw synthesis gas stream in the HT shift stage (122, 220, 322) under conditions of high-temperature CO conversion to afford a first converted synthesis gas stream, discharging the first converted synthesis gas stream from the HT shift stage (122, 220, 322);
(g) introducing the first converted synthesis gas stream into a low-temperature CO conversion stage (LT shift stage, 124, 222, 324) containing a catalyst active for low-temperature CO conversion, reacting the first converted synthesis gas stream in the LT shift stage (124, 222, 324) under conditions of low-temperature CO conversion to afford a second converted synthesis gas stream, discharging the second converted synthesis gas stream from the LT shift stage (124, 222, 324);
(h) introducing the second converted synthesis gas stream into a CO₂ separation apparatus (126, 224, 326) configured as a physical gas scrubbing with methanol as the scrubbing medium, contacting the second converted synthesis gas stream in the CO₂ separation apparatus (126, 224, 326) with the scrubbing medium under conditions of physical gas scrubbing, discharging a CO₂-depleted synthesis gas stream as a hydrogen-rich synthesis gas stream and a CO₂-rich gas stream from the CO₂ separation apparatus (126, 224, 326);
(i) wherein the process comprises no further reforming step in a steam reformer with catalyst-filled reformer tubes heated using burners.

2. Process according to Claim 1, **characterized in that** the process comprises no further hydrogen enrichment steps.

3. Process according to Claim 1 or 2, **characterized in that** the pre-reforming conditions, the first steam-carbon ratio, the second steam-carbon ratio, the conditions of the autothermal reforming, the conditions of the high-temperature CO conversion, the conditions of the low-temperature CO conversion and the conditions of the physical gas scrubbing are chosen such that the hydrogen-rich synthesis gas stream has a hydrogen content of at least 90 mol%, preferably of at least 95 mol%.

4. Process according to any of the preceding claims, **characterized in that** the hydrogen-rich synthesis gas stream is at least partially, preferably completely, utilized as fuel gas.

5. Process according to any of the preceding claims, **characterized in that** the hydrogen-rich synthesis gas stream is utilized as fuel gas and/or provided to consumers without further compression.

6. Process according to any of the preceding claims, **characterized in that** before pre-reforming process step (c), the input gas stream containing hydrocarbons is supplied to a desulfurization stage, wherein the desulfurization stage comprises at least one reactor for hydrodesulfurization (HDS) (106) and a sorption vessel containing an H₂S-selective sorbent, wherein a portion of the hydrogen-rich synthesis gas stream is used as the hydrogenating hydrogen for the hydrodesulfurization.

7. Process according to any of the preceding claims, **characterized in that** before pre-reforming process step (c), the input gas stream containing hydrocarbons is heated to a temperature between 450 °C and 500 °C using a first heating apparatus, wherein the first heating apparatus is operated using at least one first burner and at least a portion of the hydrogen-rich synthesis gas stream is used in the at least one first burner as fuel gas.

8. Process according to Claim 7, **characterized in that** the pre-reformed process gas mixture stream is discharged from the pre-reforming stage and introduced into the ATR (114, 214, 314) without further heating.

9. Process according to any of the preceding claims, **characterized in that** through adjustment of the first process steam stream and/or the second process steam, the second steam-carbon ratio has a value between and including 0.5 to 2.5, preferably between and including 0.8 to 1.6, most preferably between and including 1.0 to 1.4.

10. Process according to any of the preceding claims, **characterized in that** before performing process step (h) the second converted synthesis gas stream is cooled to a temperature of below 50 °C, preferably below 40 °C, in indirect heat exchange with a water stream.

11. Process according to any of the preceding claims, **characterized in that** at least a portion of the steam product stream is superheated using a second heating apparatus, wherein the second heating apparatus is operated using at least one second burner and at least a portion of the hydrogen-rich synthesis gas stream is used as fuel gas in the at least one second burner.

12. Process according to any of the preceding claims, **characterized in that** at least a portion of the steam product stream and/or of the superheated steam product stream is utilized to generate electrical energy in a steam turbine.

13. Process according to any of the preceding claims, **characterized in that** a portion of the hydrogen-rich synthesis gas stream is admixed with the input gas stream before process step (b).

14. Process according to any of the preceding claims, **characterized in that** a further off-gas stream comprising carbon dioxide, hydrogen and methane is discharged from the CO₂ separation apparatus (126, 224, 326), wherein the further off-gas stream is at least partially recycled and introduced into the process upstream of process step (a).

15. Process according to any of the preceding claims, **characterized in that** the process is a single-train process and has a production rate for the hydrogen-rich synthesis gas stream between zero and 1 000 000 Nm³/h, preferably between 300 000 Nm³/h and 1 000 000 Nm³/h, most preferably between 600 000 Nm³/h and 1 000 000 Nm³/h.

16. Process according to any of the preceding claims, **characterized in that** during startup of the process production of one or more process steam streams is carried out using electrically operated heating apparatuses.

17. Process according to any of the preceding claims, **characterized in that** the conditions of the autothermal reforming are selected such that the hot raw synthesis gas stream has a temperature of 900 °C or higher, preferably a temperature of 1000 °C or higher, most preferably a temperature of 1050 °C or higher.

18. Process according to any of the preceding claims, **characterized in that** the hydrogen-rich synthesis gas stream is at least partially supplied to a hydrogen liquefaction plant.

19. Process according to any of the preceding claims, **characterized in that** the process does not comprise a compression step between process steps (a) and (h).

20. Process according to any of the preceding claims, **characterized in that** the process comprises a reforming step in a gas-heated reformer (GHR) (216).

21. Plant (100, 200, 300) for producing a hydrogen-rich synthesis gas stream from an input gas stream containing hydrocarbons, preferably from a natural gas stream, comprising the following constituents in fluid connection with one another:
(a) means (102, 202, 302) for providing the input gas stream containing hydrocarbons, preferably the natural gas stream, at a pressure between 20 and 80 bara, preferably between 35 and 65 bara, most preferably between 40 and 60 bara;
(b) means for adding a first process steam stream to the compressed input gas stream;
(c) a pre-reforming stage (110, 210, 310) comprising at least one pre-reforming reactor which is configured as a shaft reactor and contains a bed of a catalyst active for the pre-reforming, means (108, 208, 308) for introducing the first process gas mixture stream into the pre-reforming stage (110, 210, 310); means for discharging the pre-reformed process gas mixture stream from the pre-reforming stage (110, 210, 310);
(d) an autothermal reforming reactor (ATR, 114, 214, 314), means for introducing the pre-reformed process gas mixture stream, a second process steam stream and an oxygen stream into the ATR (114, 214, 314), means for discharging a hot raw synthesis gas stream containing hydrogen (H₂), carbon monoxide (CO), carbon dioxide (CO₂) and unconverted hydrocarbons from the ATR (114, 214, 314);
(e) a waste heat boiler (116, 316), means for introducing the hot raw synthesis gas stream into the waste heat boiler (116, 316), means (118, 318) for discharging a cooled raw synthesis gas stream and a steam product stream from the waste heat boiler (116, 316);
(f) a high-temperature CO conversion stage (HT shift stage) (122, 220, 322) containing a catalyst active for the high-temperature CO conversion, means for introducing the cooled raw synthesis gas and a third process steam stream into the HT shift stage, means for discharging a first converted synthesis gas stream from the HT shift stage (122, 220, 322);
(g) a low-temperature CO conversion stage (LT shift stage) (124, 222, 324) containing a catalyst active for the low-temperature CO conversion, means for introducing the first converted synthesis gas stream into the LT shift stage (124, 222, 324), means for discharging a second converted synthesis gas stream from the LT shift stage (124, 222, 324);
(h) a CO₂ separation apparatus (126, 224, 326) configured as a physical gas scrubbing with methanol as the scrubbing medium, means for introducing the second converted synthesis gas stream into the CO₂ separation apparatus (126, 224, 326), means (130, 228, 330) for discharging a CO₂-depleted synthesis gas stream as a hydrogen-rich synthesis gas stream and a CO₂-rich gas stream from the CO₂ separation apparatus (126, 224, 326); wherein
(i) the plant (100, 200, 300) comprises no steam reformer with catalyst-filled reformer tubes heated using burners;
(j) the plant (100, 200, 300) comprises no further hydrogen enrichment apparatuses.
